# EUROPÄISCHE PATENTSCHRIFT

(11) **EP 3 409 088 B1**
(45) Veröffentlichungstag und Bekanntmachung des Hinweises auf die Patenterteilung: **22.04.2020**
(21) Anmeldenummer: 18175485.4
(22) Anmeldetag: 01.06.2018
(51) Int. Cl.: A01B 69/00, A01B 79/00, A01B 61/00

(54) **VORRICHTUNG ZUM AUFZEICHNEN VON FAHRWEGDATEN EINES LANDWIRTSCHAFTLICHEN ARBEITSGERÄTS**
DEVICE FOR RECORDING DATA REGARDING THE PATH OF TRAVEL OF AN AGRICULTURAL WORK DEVICE
DISPOSITIF D'ENREGISTREMENT DE DONNÉES DE TRAJET D'UN APPAREIL DE TRAVAIL AGRICOLE

(30) Priorität: 02.06.2017 DE 202017103346 U
(43) Veröffentlichungstag der Anmeldung: 05.12.2018
(73) Patentinhaber: PÖTTINGER Landtechnik GmbH, 4710 Grieskirchen (AT)
(72) Erfinder: RATZBERGER, Daniel, 4193 Reichenthal (AT); SEYFRIED, Josef, 4782 St. Florian a. Inn (AT); BALDINGER, Martin, 4722 Peuerbach (AT)
(74) Vertreter: Thoma, Michael

(56) Entgegenhaltungen:
- EP-A1- 3 089 493
- EP-A1- 3 104 245
- CN-A- 106 572 630
- DE-A1-102006 019 188

## Beschreibung

Die vorliegende Erfindung betrifft eine Vorrichtung zum Aufzeichnen von Fahrwegdaten eines landwirtschaftlichen Arbeitsgeräts, umfassend ein an dem landwirtschaftlichen Arbeitsgerät anbringbares Datenerfassungsmodul zum Erfassen von Betriebsdaten des Arbeitsgeräts sowie ein mit dem Datenerfassungsmodul in Kommunikationsverbindung bringbares mobiles Endgerät, insbesondere Smartphone oder Tablet, wobei das mobile Endgerät dazu ausgebildet ist, die von dem Datenerfassungsmodul empfangenen Betriebsdaten zusammen mit Positionsdaten zum Bestimmen von Fahrwegsdaten, die den von dem landwirtschaftlichen Arbeitsgerät abgefahrenen Fahrweg repräsentieren, auszuwerten und/oder zum Bestimmen der genannten Fahrwegsdaten an eine Auswerteeinheit zu übertragen, wobei eine Bestimmungseinrichtung zum Unterscheiden zwischen Arbeitsbetrieb und Nichtarbeitsbetrieb des landwirtschaftlichen Arbeitsgeräts vorgesehen und die Fahrwegsdaten in Abhängigkeit von Arbeitsbetrieb und Nichtarbeitsbetrieb unterschiedlich konfigurierbar und/oder unterschiedlich speicherbar sind.

Um die landwirtschaftliche Feldbearbeitung effizient verwalten zu können, werden in jüngerer Zeit automatische Aufzeichnungssysteme eingesetzt, mit denen die von einem landwirtschaftlichen Arbeitsgerät durchgeführte Feldbearbeitung automatisch aufgezeichnet wird. Dabei ist es bekannt, beispielsweise über GPS-Daten den Fahrweg aufzuzeichnen, den das Arbeitsgerät auf dem zu bearbeitenden Feld und gegebenenfalls auch zwischen verschiedenen Feldern oder zwischen dem Hof und einem Feld abfährt, wobei bei einer solchen automatischen Betriebserfassung auch ergänzende Daten wie Arbeitszeit, bearbeitete Fläche, Anzahl der Fuhren sowie Einsatzzeit des Arbeitsgeräts erfasst und abgespeichert werden können.

Anhand der aufgezeichneten Fahrwegsdaten und den gegebenenfalls zusätzlich bestimmten Betriebsdaten können beispielsweise Abrechnungen erstellt oder eine Planung der weiteren Arbeitsabläufe auf dem Feld und die Einsatzplanung der demnächst benötigten Maschinen durchgeführt werden. Wird beispielsweise der Fahrweg einer Mähmaschine auf einem bestimmten Feld aufgezeichnet, kann daraus abgeleitet werden, dass dort im nächsten Arbeitsschritt ein Schwader benötigt wird und dorthin zu verschaffen ist. Wird sodann der Fahrweg des Schwaders auf diesem Feld aufgezeichnet, kann wiederum abgeleitet, dass in einem nächsten Arbeitsschritt ein Ladewagen oder eine Ballenpresse dort benötigt wird. Um zu wissen, welches Arbeitsgerät einen entsprechenden Fahrweg zurückgelegt hat, wird üblicherweise eine Maschinenkennung von dem Datenerfassungsmodul auf das mobile Endgerät übertragen, sodass das mobile Endgerät bzw. eine externe Auswerteeinrichtung, auf die das mobile Endgerät die Daten überträgt, weiß, welche Maschine den Fahrweg abgefahren hat.

Die aufgezeichneten Fahrwegsdaten können weiterhin auch dazu genutzt werden, das landwirtschaftliche Arbeitsgerät, das den nächsten Arbeitsvorgang ausführt, zu navigieren. Wurden beispielsweise die Fahrgassen einer Mähmaschine aufgezeichnet, kann mittels einer halb- oder vollautomatischen Lenkeinrichtung der nachfolgend das Feld bearbeitende Schwader anhand der aufgezeichneten Fahrwegsdaten entlang der Fahrgassen der Mähmaschine entlanggelenkt werden. Dabei ist es bei der Aufzeichnung der Fahrwegsdaten von Bedeutung, ob sich das landwirtschaftliche Arbeitsgerät tatsächlich im Arbeitsbetrieb befindet oder beispielsweise nur zum Zwecke des Transports mit inaktiven Arbeitsaggregaten über das Feld fährt. Beispielsweise sind üblicherweise im Vorgewende die Arbeitsaggregate inaktiv, sodass eine nachfolgende Auswertung beispielsweise der bearbeiteten Fläche ungenau wird oder ein nachfolgendes Arbeitsgerät, beispielsweise ein Schwader nach einer Mähmaschine, auf einem zuvor unbearbeiteten Flächenstück unsinnige oder gar beschädigungsanfällige Arbeiten ausführen kann, wenn bei der Aufzeichnung der Fahrwegsdaten nicht unterschieden wird, ob sich das jeweilige landwirtschaftliche Arbeitsgerät im Arbeitsbetrieb oder im Nichtarbeitsbetrieb befindet.

Aus der Schrift DE 10 2006 019 188 A1 ist eine Vorrichtung zum Aufzeichnen des Fahrwegs eines landwirtschaftlichen Arbeitsgeräts bekannt, die bei der Aufzeichnung der Fahrwegsdaten unterscheiden kann, ob ein Arbeitsaggregat ein- oder ausgestellt ist. Genauer gesagt wird die Aufzeichnungseinrichtung in Abhängigkeit des Betriebzustands des Arbeitsgeräts aktiviert oder eben deaktiviert, sodass nur dann Fahrwegsdaten aufgezeichnet werden, wenn sich das Arbeitsgerät in einem bestimmten Betriebszustand befindet. Hierzu werden maschinenspezifische Funktionen sensorisch überwacht, beispielsweise wird mittels eines Fahrtrichtungssensors zwischen Vorwärts- und Rückwärtsfahrt unterschieden oder mittels eines Sprühsensors überwacht, ob eine Feldspritze sprüht oder nicht sprüht. Diese vorbekannte Aufzeichnungsvorrichtung ist jedoch gerätespezifisch an das jeweilige Arbeitsaggregat angepasst und daher kaum an ältere Arbeitsaggregate nachrüstbar, die eine entsprechende Sensorik noch nicht aufweisen. Zudem gehen durch die zeitweise Deaktivierung der Aufzeichnungseinrichtung Fahrwegsdaten verloren, die für nachgeschaltete Auswertungen wie beispielsweise Gesamtbetriebszeit, Feldbearbeitungszeit oder Anzahl der benötigten Fuhren benötigt werden.

Es wurden auch bereits an bestehenden landwirtschaftlichen Arbeitsgeräten nachrüstbare Aufzeichnungsvorrichtungen zum Aufzeichnen des Fahrwegs vorgeschlagen, die jedoch mangels Unterscheidung des Betriebszustands des jeweiligen Arbeitsgeräts eine nachfolgende Auswertung der aufgezeichneten Fahrwegsdaten nur eingeschränkt zulassen. Beispielsweise ist von der Firma 365FarmNet eine Aufzeichnungsvorrichtung namens "365 ActiveBox" bekannt, bei der ein batteriebetriebenes Datenerfassungsmodul mit einem Sender an dem landwirtschaftlichen Arbeitsgerät angebracht wird, das die Arbeitszeiten und die Positionsdaten entlang des abgefahrenen Wegs erfasst und auf ein Smartphone überträgt, auf dem eine App zur Weiterverarbeitung der erfassten Betriebsdaten installiert ist.

Ferner ist aus dem Magazin "profi", Ausgabe 1/2017, Seiten 102 bis 104 ein Aufzeichnungssystem bekannt, bei dem ein am landwirtschaftlichen Arbeitsgerät angebrachter Sender eine Gerätekennung an ein Smartphone sendet, das der Schlepperführer bei sich trägt und eine App aufweist, die die erhaltene Maschinenkennung mit GPS-Daten aus dem Smartphone verknüpft, um Fahrwegsdaten für das jeweilige Arbeitsgerät zu generieren. Die im Handy programmierte App legt beispielsweise bei Erhalt der Kennung eines Grubbers einen Auftrag "Grubbern" an und erfasst hierzu die Zeit, die beim Befahren eines bestimmten Felds verstreicht. Weitere Aufzeichnungssysteme zeigen die Schriften EP 31 04 245 A1, EP 30 89 493 A1 und CN 106 572 630 A.

Hiervon ausgehend liegt der vorliegenden Erfindung die Aufgabe zugrunde, eine verbesserte Vorrichtung zum Aufzeichnen von Fahrwegsdaten eines landwirtschaftlichen Arbeitsgeräts zu schaffen, das Nachteile des Standes der Technik vermeidet und Letzteren in vorteilhafter Weise weiterbildet. Insbesondere soll eine auch an älteren landwirtschaftlichen Arbeitsgeräten einfach nachrüstbare Lösung geschaffen werden, die beim Aufzeichnen der Fahrwegsdaten verlässlich den Betriebszustand des Arbeitsaggregats unterscheiden kann.

Erfindungsgemäß wird die genannte Aufgabe durch eine Vorrichtung nach Anspruch 1 gelöst. Bevorzugte Ausgestaltungen der Erfindung sind Gegenstand der abhängigen Ansprüche.

Es wird also vorgeschlagen, am landwirtschaftlichen Arbeitsaggregat, an dem das Datenerfassungsmodul angebracht wird, Neigungen und Beschleunigen zu erfassen und anhand der erfassten Beschleunigungen und Neigungen zu unterscheiden, ob sich das Arbeitsgerät im Arbeitsbetrieb oder Nichtarbeitsbetrieb befindet, und die Fahrwegsdaten in Abhängigkeit hiervon unterschiedlich zu konfigurieren und/oder unterschiedlich aufzuzeichnen. Die Neigung des Arbeitsaggregats und am Arbeitsgerät auftretende Beschleunigungen sind überraschenderweise bei vielerlei verschiedenen Gerätetypen ein verlässliches Maß dafür, ob sich die Gerätschaft im Arbeitsbetrieb oder Nichtarbeitsbetrieb befindet, sodass die Vorrichtung an verschiedenste Arbeitsgerätetypen nachrüstbar ist, ohne eine gerätespezifische Sensorik zu benötigen. Erfindungsgemäß ist vorgesehen, dass das am landwirtschaftlichen Arbeitsgerät anbringbare Datenerfassungsmodul einen Neigungssensor zum Erfassen der Neigung eines Arbeitsaggregats und einen Beschleunigungssensor zum Erfassen von an dem Arbeitsgerät auftretenden Beschleunigungen aufweist, wobei die Bestimmungseinrichtung zum Unterscheiden zwischen Arbeitsbetrieb und Nichtarbeitsbetrieb dazu ausgebildet ist, anhand der erfassten Neigung und der erfassten Beschleunigung zwischen Arbeitsbetrieb und Nichtarbeitsbetrieb zu unterscheiden. Auch wenn bei Befahren unebenen Geländes das Arbeitsgerät verschiedene Neigungen gegenüber der Horizontalen einnehmen kann, lässt sich doch anhand der Neigung des Arbeitsaggregats verlässlich zwischen Arbeitsbetrieb und Nichtarbeitsbetrieb unterscheiden, zumindest wenn ergänzend am Arbeitsaggregat auftretende Beschleunigungen berücksichtigt werden. Dies geht von der Überlegung aus, dass Arbeitsaggregate üblicherweise zwischen einer ausgehobenen Vorgewende- und/oder Transportstellung und einer abgesenkten Arbeitsstellung sehr viel stärker ihre Neigung ändern als dies beim Überfahren welligen Geländes der Fall ist, da zwischen abgesenkter Arbeitsstellung und ausgehobener Transportstellung bei vielen landwirtschaftlichen Arbeitsgeräten eine Verschwenkung von näherungsweise 90° liegt. Um ausschließen zu können, dass das Arbeitsgerät mit abgesenkten Arbeitsaggregat abgestellt wurde oder versehentlich mit abgesenktem Arbeitsaggregat eine glattgeteerte Straße erschütterungsfrei befahren wird, wird mittels des Beschleunigungssensors eine am Arbeitsgerät wirkende Beschleunigung erfasst, was auf der Überlegung beruht, dass beim Befahren eines zu bearbeitenden Feldes bestimmungsgemäß aufgrund der Arbeitsfunktion und des holprigen Geländes relativ hohe Beschleunigungen auftreten.

In vorteilhafter Weiterbildung der Erfindung kann die genannte Bestimmungseinrichtung zum Unterscheiden zwischen Arbeitsbetrieb und Nichtarbeitsbetrieb Zeiterfassungsmittel aufweisen und die genannte Unterscheidung auf Basis der erfassten Beschleunigung und der erfassten Neigung unter zusätzlicher Berücksichtigung der hierbei verstreichenden Zeit treffen. Insbesondere kann die Bestimmungseinrichtung dazu ausgebildet sein, zu berücksichtigen, wie lange eine bestimmte Beschleunigung und/oder eine bestimmte Neigung auftritt, um dann in Abhängigkeit hiervon zwischen Arbeitsbetrieb und Nichtarbeitsbetrieb zu unterscheiden.

Insbesondere kann die genannte Bestimmungseinrichtung dazu ausgebildet sein, den Arbeitsbetrieb des landwirtschaftlichen Arbeitsgeräts dann anzunehmen, wenn die Beschleunigung über eine vorbestimmte Zeit ein vorbestimmtes Niveau erreicht bzw. überschreitet und die erfasste Neigung über eine vorbestimmte Zeitspanne kleiner als ein vorgegebener Wert ist, welcher Wert eine Toleranzschwelle gegenüber der bestimmungsgemäßen, abgesenkten Arbeitsstellung darstellen kann. Liegt beispielsweise die vom Beschleunigungssensor erfasste Beschleunigung über eine Dauer von ≥ xx Sekunden über einem vorbestimmten Wert und ist gleichzeitig die Neigung über eine Dauer von xx oder yy Sekunden kleiner als ein vorbestimmter Winkel, der gegenüber der bestimmungsgemäßen Arbeitsstellung gemessen wird, kann die Bestimmungseinrichtung einen Arbeitsbetrieb feststellen. Ist indes die erfasste Neigung über eine vorbestimmte Zeitdauer größer als der genannte oder ein anderer vorbestimmter Winkelwert oder tritt über eine vorbestimmte Zeitspanne keine Beschleunigung oder nur eine Beschleunigung unterhalb eines Schwellwerts auf, kann von einem Nichtarbeitsbetrieb ausgegangen werden.

In vorteilhafter Weiterbildung der Erfindung kann für das Signal des Neigungssensors und/oder für das Signal des Beschleunigungssensors eine Filtervorrichtung vorgesehen sein, mittels derer das Signal gefiltert wird, wobei hier verschiedene Filtervorrichtungen eingesetzt werden können. Alternativ oder zusätzlich zu einer solchen Filtervorrichtung kann eine Signalverarbeitungseinrichtung vorgesehen sein, die das Neigungssensorsignal und/oder das Beschleunigungssensorsignal vor Auswertung durch die Bestimmungseinrichtung bearbeitet. Beispielsweise kann ein Signalmittelwert gebildet werden und/oder es können Signalspitzen abgeschnitten werden und/oder es können Signalveränderungsraten ermittelt und/oder es können Maximal- und/oder Minimalwerte bestimmt werden.

Anhand des solchermaßen gefilterten und/oder bearbeiteten Neigungssignals und Beschleunigungssignals kann die Bestimmungseinrichtung in der zuvor erläuterten Weise bestimmen, ob sich die Arbeitsmaschine im Arbeitsbetrieb oder Nichtarbeitsbetriebs befindet.

Die ermittelten Fahrwegsdaten können vorteilhafterweise auf der Anzeigevorrichtung des mobilen Endgeräts und ggf. auch auf der Anzeigevorrichtung eines nachgeschalteten Verwaltungsrechners in verschiedener Weise angezeigt werden, wobei die Anzeigevorrichtung vorteilhafterweise dazu konfiguriert ist, die ermittelten Fahrwegsdaten grafisch anzuzeigen. Insbesondere kann der durch die Fahrwegsdaten repräsentierte Fahrweg in eine kartografische Umgebungsansicht eingebettet dargestellt werden.

Vorteilhafterweise kann der Anzeigevorrichtung ein Grafik-Controller zugeordnet sein, der die Fahrwegsdaten, zu denen ein aktiver Arbeitsbetrieb der Maschine erfasst wurde, in anderer Weise darstellt als die Fahrwegsdaten, zu denen ein inaktiver Nichtarbeitsbetrieb erfasst wurde. Beispielsweise können Fahrwegsabschnitte im Arbeitsbetrieb in einer anderen Farbe als Fahrwegsabschnitte im Nichtarbeitsbetrieb dargestellt werden. Alternativ oder zusätzlich kann die grafische Fahrwegsdarstellung auch mit durchgezogenen und strichlierten Linien ausgeführt sein, um zwischen Arbeitsbetrieb- und Nichtarbeitsbetrieb-Fahrwegsabschnitten zu unterscheiden.

Der genannte Grafik-Controller kann dabei vorteilhafterweise Teil des mobilen Endgeräts sein, beispielsweise in Form einer dort gespeicherten App oder zumindest teilweise von einem entsprechenden, einspielbaren Softwarebaustein ansteuerbar sein, um auf den Display des Handys oder Tablets die Fahrwegsdaten dem Maschinenführer direkt anzeigen zu können.

Die aufgezeichneten Fahrwegsdaten und/oder deren grafische Darstellung können auch auf einem mit dem mobilen Endgerät verbindbaren Verwaltungsrechner gespeichert und/oder angezeigt werden. Vorteilhafterweise kann das mobile Endgerät und/oder der genannte Verwaltungsrechner einen Austauschbaustein beispielsweise in Form einer Softwareschnittstelle umfassen, um auch Dritten, berechtigten Usern einen Zugriff auf die aufgezeichneten Fahrwegsdaten und/oder Fahrwegsdarstellungen zu ermöglichen. Ein solcher Zugriff auf die aufgezeichneten Fahrwegsdaten kann beispielsweise über eine Serverschnittstelle verwaltet werden.

In vorteilhafter Weiterbildung der Erfindung ist das System dazu ausgebildet, Fahrwegsdaten verschiedener landwirtschaftlicher Arbeitsgeräte und/oder verschiedener Bearbeitungsvorgänge miteinander zu verknüpfen und/oder abzugleichen und die Darstellung der Fahrwegsdaten bzw. des Fahrwegs in Abhängigkeit eines erfolgten Datenabgleichs zu aktualisieren. Die Vorrichtung kann hierzu eine Datenverknüpfungseinrichtung, die verschiedene Datensätze von Fahrwegsdaten verschiedener Arbeitsgeräte und/oder verschiedener Arbeitsvorgänge miteinander verknüpft und abgleicht, und eine Aktualisierungseinrichtung aufweisen, die die Darstellung der Fahrwegsdaten bzw. des Fahrwegs auf der Anzeigevorrichtung des mobilen Endgeräts und/oder der Anzeigevorrichtung eines damit verbindbaren Verwaltungsrechners in Abhängigkeit des erfolgten Datensatzabgleiches aktualisiert.

Insbesondere können beispielsweise Fahrwegsdaten aus einer ersten Feldbearbeitung mit einem ersten Arbeitsgerät in einer ersten Darstellungsweise, beispielsweise einer ersten Farbe, und die Fahrwegsdaten aus einem zweiten Feldbearbeitungsvorgang mit einer zweiten Maschine in einer zweiten Darstellungsweise, beispielsweise in Form einer zweiten Farbe, dargestellt werden. Ist auf einem bestimmten Feld beispielsweise zunächst mit einer Mähmaschine gemäht worden und sodann in einem zweiten Bearbeitungsschritt mit einem Schwader das gemähte Erntegut geschwaded worden, kann beispielsweise der Fahrweg der Mähmaschine durch eine grüne Linie dargestellt und der Fahrweg des Schwaders durch eine gelbe Linie dargestellt werden, wobei neben diesen Darstellungen der Fahrwegsabschnitte, die im Arbeitsbetrieb erfolgt sind, auch zusätzlich noch Fahrwegsabschnitte, die im Nichtarbeitsbetrieb erfolgt sind, beispielsweise im Vorgewende, in einer dritten und vierten Farbe dargestellt sein können.

Vorteilhafterweise kann die Vorrichtung aber nicht nur mehrere Fahrwege verschiedener Arbeitsgeräte und/oder Bearbeitungsschritte nebeneinander darstellen, sondern auch analysieren und miteinander verknüpfen. Stellt eine entsprechend ausgebildete Auswerteeinrichtung beispielsweise fest, dass ein zweiter dargestellter Fahrweg von einer planmäßig in einem zweiten Arbeitsgang einzusetzenden Maschine stammt und ausreichend nahe am Fahrweg der ersten Arbeitsmaschine bzw. des ersten Arbeitsschrittes liegt, kann die Darstellung des ersten Fahrwegs gelöscht oder unterdrückt werden, um die Darstellung nicht zu überfrachten und den aktuellen Status leicht greifbar darzustellen. Vorteilhafterweise kann der Grafik-Controller der Anzeigevorrichtung des mobilen Endgeräts und/oder eines damit verbindbaren Verwaltungsrechners dazu ausgebildet sein, in einem aktualisierten Darstellungsmodus lediglich den Fahrweg des letzten Bearbeitungsschritts einzublenden und darzustellen, wobei der Grafik-Controller von der zuvor genannten Auswerteeinrichtung so angesteuert werden kann, dass dieser aktualisierte Darstellungsmodus nur dann aktiviert wird, wenn der Fahrweg des zweiten Arbeitsgeräts und/oder des zweiten Arbeitsvorgangs ausreichend nahe am Fahrweg des ersten Arbeitsgeräts und/oder ersten Arbeitsvorgangs liegt und/oder das zweite Arbeitsgerät einem Gerätstypus entspricht, mit dem planmäßig ein zweiter Arbeitsvorgang auszuführen ist.

Beispielsweise kann nach der Erfassung des Fahrwegs einer Mähmaschine und darauffolgend des Fahrwegs eines Schwaders, die in der vorgenannten Weise durch eine beispielsweise grüne und gelbe Linie dargestellt werden können, die Auswerteeinrichtung prüfen, ob der Fahrweg des Schwaders nahe genug beim Fahrweg der Mähmaschine liegt, beispielsweise in einem Korridor von < 10m, woraufhin dann die Fahrwegsabschnitte der Mähmaschine, die im besagten Korridor liegen, gelöscht werden bzw. in dem aktualisierten Darstellungsmodus nicht mehr dargestellt werden. Stellt die Auswerteeinrichtung indes fest, dass der Fahrweg des Schwaders außerhalb des besagten, vorgebbaren Korridors liegt, kann die Darstellung des Fahrwegs der Mähmaschine erhalten bleiben. Alternativ oder zusätzlich kann die Darstellung des Mähmaschinenfahrwegs auch dann erhalten bleiben, wenn der Fahrweg des zweiten Arbeitsgeräts von einem planmäßig nicht vorgesehenen Arbeitsgerät stammt, beispielsweise mit einem Zetter anstelle eines Schwaders gefahren wurde.

Vorteilhafterweise kann die Auswerteeinrichtung aus den aufgezeichneten Betriebsdaten über den Fahrweg und den Arbeitsbetrieb/Nichtarbeitsbetrieb hinaus weitere interessierende Informationen ableiten und/oder gewinnen. Insbesondere kann die Auswerteeinrichtung aus den genannten, ermittelten Fahrwegsdaten und in zugehörigen Daten über den Arbeitsbetrieb/Nichtarbeitsbetrieb folgende Betriebsparameter bestimmen: Die Gesamteinsatzzeit der Maschine, die Einsatzzeit und/oder Transportzeit einer Maschine in einem vorgebbaren Zeitbereich, beispielsweise die Arbeitszeit, die Stillstandszeit und die Transportzeit einer bestimmten Maschine in einer bestimmten Kalenderwoche, die Einsatzzeit und/oder Transportzeit einer bestimmten Maschine zu einem bearbeiteten Auftrag, die Anzahl der Fuhren, beispielsweise eines Ladewagens und/oder die Anzahl der Rundballen einer Rundballenpresse bei der Bearbeitung eines bestimmten Felds oder eines Feldbereichs, und/oder die von einer Maschine bearbeitete Fläche.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung einer Vorrichtung zum Aufzeichnen von Fahrwegdaten, die gemäß einer Ausführung der Erfindung ein Datenerfassungsmodul an einem landwirtschaftlichen Anbaugerät, ein mobiles Endgerät in Form eines Handys oder Tablets an einem Schlepper sowie einen Verwaltungsrechner in der Betriebsstätte eines Maschinenbetreibers aufweist, wobei die Teilansicht (a) eine Seitenansicht und die Teilansicht (b) eine Heckansicht mit verschiedenen Neigungsstellungen des Anbaugeräts zeigt,

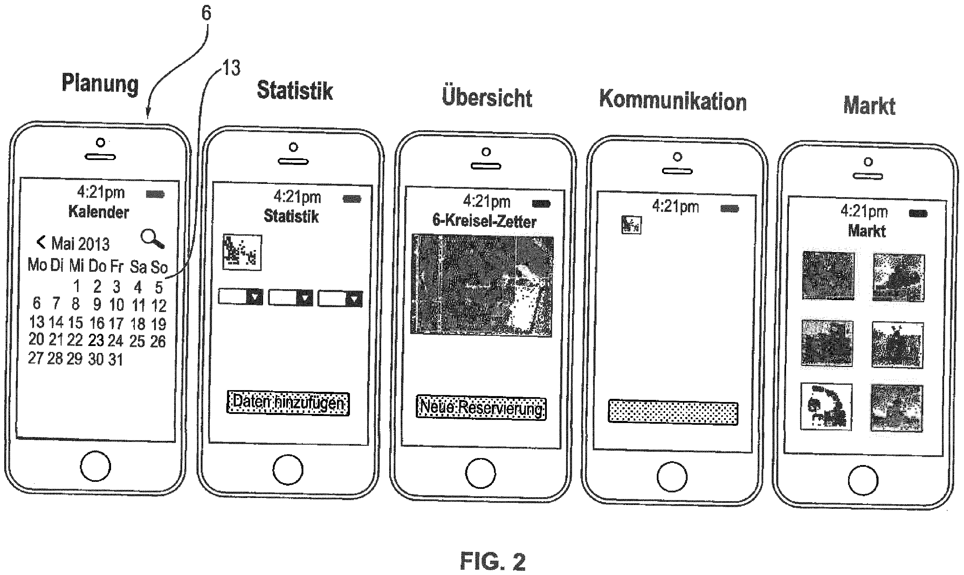

- Fig. 2:: eine schematische Darstellung des mobilen Endgeräts der Vorrichtung aus Fig. 1 in verschiedenen Darstellungsmodi zum Darstellen der verschiedenen Datenauswertungen, und
- Fig. 3:: eine vergrößerte Darstellung der Bildschirmanzeige der Fahrwegsabschnitte auf Basis der erfassten Fahrwegsdaten und des dazu erfassten Arbeitsbetriebs/Nichtarbeitsbetriebs in verschiedenen Darstellungsweisen.

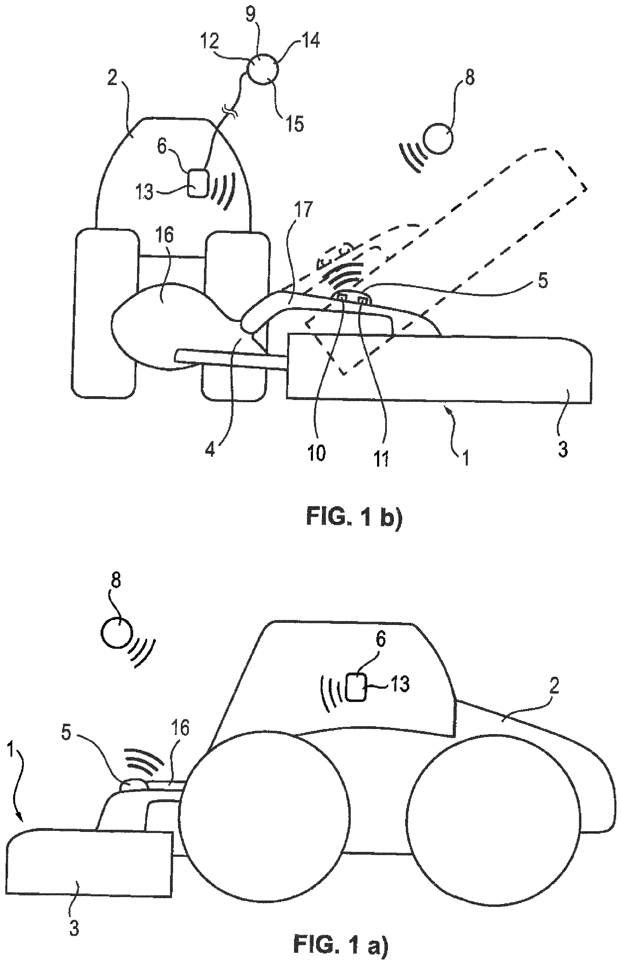

Wie Fig. 1 zeigt, kann die Vorrichtung zum Aufzeichnen von Fahrwegdaten an einem landwirtschaftlichen Anbaugerät 1 Verwendung finden, das an einen Schlepper 2 anbaubar ist, beispielsweise heckseitig oder frontseitig mittels einer Anbauvorrichtung 16. Das Anbaugerät 1 kann beispielsweise eine Mähmaschine sein, wie dies Fig. 1 zeigt, wobei vorteilhafterweise aber auch andere und insbesondere auch mehrere, verschiedene Anbaugeräte hintereinander an die Vorrichtung zum Aufzeichnen von Fahrwegsdaten angebunden werden können, beispielsweise eine Heuwerbungsmaschine in Form eines Zetters oder eines Schwaders und nachfolgend ein Ladewagen oder eine Ballenpresse. Neben der Verwendung an Grünlandmaschinen kann die Vorrichtung aber auch an Bodenbearbeitungsgeräten wie beispielsweise einem Pflug und einem Grubber oder eine Sämaschine Verwendung finden.

Wie Fig. 1 zeigt, kann das Anbaugerät 1 ein Arbeitsaggregat 3 aufweisen, das im Falle der Mähmaschine ein Mähwerk sein kann. Vorteilhafterweise kann das genannte Arbeitsaggregat 3 zwischen einer abgesenkten, näherungsweise horizontalen Arbeitsstellung und einer ausgehobenen Vorgewendestellung und/oder Transportstellung verschwenkt werden, wobei das Arbeitsaggregat 3 in der genannten Transportstellung beispielsweise näherungsweise vertikal angeordnet sein kann, um die zulässige Straßenfahrbreite einzuhalten.

Das Arbeitsaggregat 3 kann hierzu beispielsweise gegenüber einem Maschinenrahmen 4 mittels eines Tragarms 17 zwischen den genannten Arbeits- und Vorgewende- und/oder Transportstellungen verbracht werden, wobei der genannte Tragarm 17 in an sich bekannter Weise durch einen Hubantrieb aushebbar sein kann.

Um den Fahrweg des Arbeitsgeräts 1 aufzuzeichnen, umfasst die Vorrichtung ein mobiles Endgerät 6 beispielsweise in Form eines Smartphones, das der Schlepperführer mit sich führen oder am Schlepper 2 installiert sein kann.

Das mobile Endgerät 6 kann vorteilhafterweise eine Positionsbestimmungseinrichtung 18 umfassen, die vorteilhafterweise in einem terrestrischen und/oder globalen Koordinatensystem seine Position bestimmen kann, wobei die genannte Positionsbestimmungseinrichtung 18 beispielsweise ein GPS-Modul sein kann.

Um zu identifizieren, welches Arbeitsgerät 1 bzw. welcher Arbeitsgerätetypus benutzt wird, ist am Arbeitsgerät 1 ein Datenerfassungsmodul 5 angebracht, das mit dem mobilen Endgerät 6 kommunizieren kann, beispielsweise über eine drahtlose Nahverbindungseinrichtung wie Bluetooth oder eine andere, geeignete Kommunikationseinrichtung, die vorteilhafterweise drahtlos arbeitet. Das Datenerfassungsmodul 5 sendet an das mobile Endgerät eine Maschinenkennung, anhand derer das mobile Endgerät 6 weiß oder bestimmen kann, beispielsweise durch Abfrage in einer Datenbank, welches Anbaugerät 1 am Schlepper 2 angebaut ist und eingesetzt wird.

Weiterhin umfasst das genannte Datenerfassungsmodul 5 einen Beschleunigungssensor 10 zum Erfassen von Beschleunigungen, die auf das Anbaugerät 3 wirken, sowie einen Neigungssensor 11, der eine Neigung des Arbeitsaggregats 3 in Form eines Neigungswinkels ϕ erfasst, der beispielsweise gegenüber der Horizontalen gemessen wird und beispielsweise der Winkel sein kann, mit dem sich der Tragarm 17 gegenüber der Horizontalen erstreckt. Der genannte Neigungssensor 11 kann hierzu beispielsweise an dem Tragarm 17 angebracht sein.

Der Beschleunigungssensor 10 kann ebenfalls an dem genannten Tragarm 17 befestigt sein, grundsätzlich aber auch an einem anderen Maschinenelement befestigt werden, beispielsweise dem Rahmen 4 oder der Anbauvorrichtung 16. Der Beschleunigungssensor 10 kann dabei einachsige oder mehrachsige Beschleunigungen erfassen, wobei der Beschleunigungssensor 10 vorteilhafterweise zumindest Beschleunigungen in aufrechter Richtung erfasst, um Stöße und Nickbewegungen zu erfassen, die typischerweise im Feldbetrieb auf unebenem Grund wirken.

Die Beschleunigungs- und Neigungssignale der Beschleunigungs- und Neigungssensoren 10 und 11 werden an das mobile Endgerät 6 übertragen, in dem in Form eines Softwarebausteins beispielsweise in Form einer herunterladbaren App eine Bestimmungseinrichtung 9 implementiert ist, die anhand der erfassten Beschleunigung und Neigung des Anbaugeräts 1 bestimmen kann, ob sich dieses im Arbeitsbetrieb oder im Nichtarbeitsbetrieb befindet.

Zeigt das Neigungssignal des Neigungssensors 11 beispielsweise eine Neigung an, die im Bereich der in Fig. 1 (b) gezeigten Vorgewendestellung oder der noch weiter nach oben verschwenkten Transportstellung liegt, oder zeigt das Beschleunigungssignal keine nennenswerte Beschleunigung an, geht die Bestimmungseinrichtung 9 davon aus, dass sich das Arbeitsgerät 1 in der Nichtarbeitsstellung bzw. im Nichtarbeitsbetrieb befindet. Zeigt andererseits der Neigungssensor 11 eine Neigung an, die im Bereich der Arbeitsstellung des Arbeitsaggregats 3, unter Berücksichtigung der üblichen Hangneigungen, liegt, und zeigt gleichzeitig der Beschleunigungssensor 10 Beschleunigungen oberhalb eines Schwellwerts an, kann davon ausgegangen werden, dass das Anbaugerät 1 sich im Arbeitsbetrieb befindet. Vorteilhafterweise umfasst die Bestimmungseinrichtung 9 eine Zeiterfassungseinrichtung, die den zeitlichen Verlauf bzw. zumindest die Dauer eines Signals erfassen bzw. bestimmen kann, so dass die zuvor genannten Annahmen beispielsweise nur dann getroffen werden, wenn die entsprechenden Signale über eine vorbestimmte Zeitdauer vorliegen, wie dies eingangs näher erläutert wurde.

Wird mit dem Arbeitsgerät 1 ein Feld 19 in hin und her gehenden bzw. mäanderförmigen Fahrgassen befahren, wird einerseits über das GPS-Modul des mobilen Endgeräts 6 der Fahrweg erfasst. Gleichzeitig wird über das Datenerfassungsmodul 5 bzw. die Bestimmungseinrichtung 9 bestimmt, ob sich das Arbeitsaggregat entlang des befahrenen Wegs im Arbeitsbetrieb oder im Nichtarbeitsbetrieb befindet.

Die aufgezeichneten Fahrwegsdaten zusammen mit den Daten, die den Arbeitsbetrieb oder Nichtarbeitsbetrieb in bestimmten Fahrwegsabschnitten anzeigen, werden zusammen mit der Maschinenkennung in einem Datensatz in einer Speichervorrichtung 15 gespeichert, die in dem mobilen Endgerät 6 vorgesehen sein kann, ggf. aber auch Teil einer externen Datenbank beispielsweise eines Hofrechners sein kann.

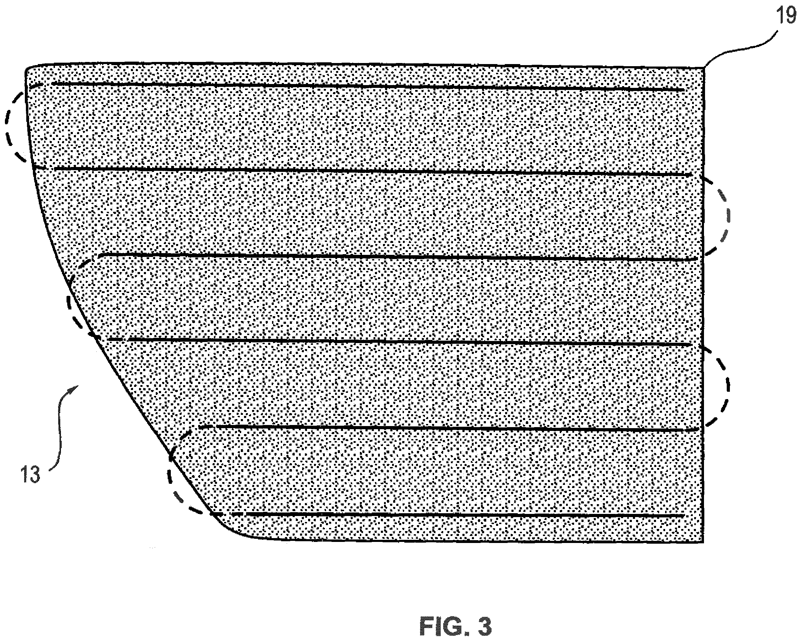

Auf der Anzeigevorrichtung 13 des mobilen Endgeräts 6 werden die aufgezeichneten Fahrwegsdaten in einem Anzeigemodus grafisch angezeigt, wie dies Fig. 3 verdeutlicht, wobei beispielsweise Fahrwegslinien, die den Fahrweg angeben, eingebettet in eine kartografische Darstellung angezeigt werden können, wobei die kartografische Darstellung beispielsweise auch Satellitenbilddaten enthalten kann.

Die grafische Darstellung der Fahrwegsdaten beispielsweise in Form einer genannten Fahrwegslinien wird dabei unterschiedlich konfiguriert, je nachdem, ob in einem entsprechenden Fahrwegsabschnitt das Arbeitsgerät 1 aktiv, d.h. im Arbeitsbetrieb oder inaktiv, d.h. im Nichtarbeitsbetrieb war. Beispielsweise können Fahrwegsabschnitte im Arbeitsbetrieb in einer ersten Farbe und Fahrwegsabschnitte in der Nichtarbeitsstellung in einer zweiten Farbe dargestellt werden, oder es können Fahrwegsabschnitte in Arbeitsstellung mit einer durchgezogenen Linie und Fahrwegsabschnitte in einer Nichtarbeitsstellung mit einer strichlierten Linie dargestellt werden, wie dies Fig. 3 zeigt, gemäß der beispielsweise die Wendevorgänge im Vorgewende strichliert, also in Nichtarbeitsstellung und die Fahrgassen zwischen den Vorgewendeabschnitten in durchgezogenen Linien, also in Arbeitsstellung dargestellt sind.

Hierzu kann eine Auswerteeinrichtung 8 beispielsweise in Form eines Softwarebausteins in dem mobilen Endgerät 6 vorgesehen sein, die die Fahrwegsdaten und die zugehörigen Daten aus der Bestimmung des Arbeitsbetriebs und des Nichtarbeitsbetriebs auswerten und den Grafik-Controller, der die Anzeige auf der Anzeigevorrichtung 13 steuert, entsprechend ansteuert. Beispielsweise können die aufgezeichneten Fahrwegsdaten von einer Markierungsvorrichtung 14 entsprechend markiert werden, wie eingangs näher erläutert.

Ferner kann die Auswerteeinrichtung 8 oder auch Auswertemittel 9 in dem mobilen Endgerät 6 oder in einem externen Verwaltungsrechner, mit dem das mobile Endgerät 6 kommunizieren kann, weitere Betriebsparameter bzw. -daten aus den erfassten Daten des Datenerfassungsmoduls 5 und des mobilen Endgeräts 6 bestimmen. Beispielsweise können bei Auswahl des Statistik-Buttons im Hauptmenü des mobilen Endgeräts 6 für den Maschinenbetreiber interessante Informationen abgerufen werden wie beispielsweise
- die Gesamteinsatzzeit der Maschine,
- die Einsatzzeit und/oder Transportzeit der Maschine in einem bestimmten Zeitbereich, beispielsweise innerhalb einer bestimmten Kalenderwoche,
- die Einsatzzeit und/oder Transportzeit der Maschine zu einem bearbeiteten Auftrag, und/oder
- die Anzahl der Fuhren eines Ladewagens und/oder die Anzahl der Rundballen bei einer Rundballenpresse, und/oder
- die insgesamt bearbeitete Fläche.

Vorteilhafterweise kann die Vorrichtung mit mehreren Anbaugeräten arbeiten, um nacheinander ausgeführte Feldbearbeitungsvorgänge in verschiedenen Datensätzen aufzuzeichnen.

Wird beispielsweise anstelle der in Fig. 1 gezeigten Mähmaschine ein Schwader zum Schwaden des gemähten Ernteguts eingesetzt, meldet dies ein dort angebrachtes Datenerfassungsmodul 5 durch Übersenden einer entsprechenden Maschinenkennung, wobei auch hier in der erläuterten Weise beim Befahren des zu bearbeitenden Feldes bestimmt werden kann, ob sich der Schwader im Arbeitsbetrieb oder im Nichtarbeitsbetrieb befindet. Die aufgezeichneten Fahrwegsdaten können ähnlich wie in Fig. 3 gezeigt in Form von Fahrwegslinien auf der Anzeigevorrichtung 13 dargestellt werden, wobei für den Fahrweg des Schwaders eine weitere Farbe oder eine andere Linienform beispielsweise in Form einer Doppelstrichlinie verwendet werden kann.

Vorteilhafterweise wertet die genannte Auswerteeinrichtung 8 und/oder die Auswertemittel 9 die beiden Datensätze der Mähmaschine und des Schwaders aus und gleicht sie gegeneinander ab, insbesondere dahingehend, ob die aufgezeichneten Fahrwegslinien des Schwaders nahe genug bei den Fahrwegslinien der Mähmaschine liegen. Falls dies erfüllt ist, können in der Darstellung der Anzeigevorrichtung die Fahrwegslinien der Mähmaschine entfernt oder unterdrückt werden, so dass die Darstellung stets den aktuellen Bearbeitungsstand des Feldes wiedergibt.

## Patentansprüche

1. Vorrichtung zum Aufzeichnen von Fahrwegdaten eines landwirtschaftlichen Arbeitsgeräts (1), umfassend ein an dem Arbeitsgerät anbringbares Datenerfassungsmodul (5) zum Erfassen von Betriebsdaten des Arbeitsgeräts sowie ein mobiles Endgerät (6), insbesondere in Form eines Smartphones oder Tablets, das mit dem Datenerfassungsmodul (5) in Kommunikationsverbindung bringbar und dazu ausgebildet ist, die von dem Datenerfassungsmodul (5) empfangenen Betriebsdaten und Maschinenkennung zusammen mit Positionsdaten zum Bestimmen des von dem landwirtschaftlichen Arbeitsgerät (3) abgefahrenen Fahrwegs (7) auszuwerten und/oder zum Auswerten an eine Auswerteeinrichtung (8) zu übertragen, wobei eine Bestimmungseinrichtung (9) zum Unterscheiden zwischen Arbeitsbetrieb und Nichtarbeitsbetrieb des landwirtschaftlichen Arbeitsgeräts (3) vorgesehen ist, **dadurch gekennzeichnet, dass** das Datenerfassungsmodul (5) einen Beschleunigungssensor (10) zum Erfassen von auf das landwirtschaftliche Arbeitsgerät (3) wirkenden Beschleunigungen und einen Neigungssensor (11) zum Erfassen einer Neigung eines Arbeitsaggregats (3) des landwirtschaftlichen Arbeitsgeräts (1) aufweist, und die genannte Bestimmungseinrichtung (9) dazu ausgebildet ist, zwischen Arbeitsbetrieb und Nichtarbeitsbetrieb anhand der vom Beschleunigungssensor (10) erfassten Beschleunigung und der vom Neigungssensor (11) erfassten Neigung zu unterscheiden.

2. Vorrichtung nach dem vorhergehenden Anspruch, wobei die Bestimmungseinrichtung (9) Auswertemittel (12) zum Auswerten des zeitlichen Verlaufs der erfassten Neigung und/oder des zeitlichen Verlaufs der erfassten Beschleunigung aufweist und dazu ausgebildet ist, zwischen Arbeitsbetrieb und Nichtarbeitsbetrieb anhand des zeitlichen Verlaufs der erfassten Beschleunigung und der erfassten Neigung zu unterscheiden.

3. Vorrichtung nach dem vorhergehenden Anspruch, wobei die Bestimmungseinrichtung (9) dazu ausgebildet ist, einen Arbeitsbetrieb des landwirtschaftlichen Arbeitsgeräts (1) zu bestimmen, wenn
- die erfasste Beschleunigung über eine vorbestimmte Mindestzeitdauer einen vorbestimmen Beschleunigungswert erreicht oder überschreitet, und
- die erfasste Neigung über eine vorbestimmte Mindestzeitdauer kleiner als ein vorbestimmter Maximalneigungswinkel ist,
und/oder einen Nichtarbeitsbetrieb bestimmt, wenn
- die erfasste Beschleunigung über eine vorbestimmte Zeitdauer kleiner als ein vorbestimmter Maximalwert ist, oder
- die erfasste Neigung über eine vorbestimmte Zeitdauer größer als ein vorbestimmter Mindestneigungswinkel ist.

4. Vorrichtung nach einem der vorhergehenden Ansprüche, wobei eine Anzeigevorrichtung (13) des mobilen Endgeräts (6) und/oder der Auswerteeinrichtung (8) dazu eingerichtet ist, Fahrwegsdaten zu Fahrwegsabschnitten, in denen von der Bestimmungseinrichtung Arbeitsbetrieb bestimmt wurde, anders anzuzeigen als Fahrwegsdaten zu Fahrwegsabschnitten, in denen von der Bestimmungseinrichtung Nichtarbeitsbetrieb bestimmt wurde.

5. Vorrichtung nach einem der vorhergehenden Ansprüche, wobei das mobile Endgerät (6) und/oder die Auswerteeinrichtung (8) eine Markierungsvorrichtung (14) zum Markieren der Fahrwegsdaten mit einer Markierung, die angibt, ob in einem zu den Fahrwerksdaten zugehörigen Fahrwegsabschnitt Arbeitsbetrieb oder Nichtarbeitsbetrieb bestimmt wurde, sowie einer Speichereinrichtung zum Abspeichern der Fahrzeugdaten verknüpft mit den Markierungen vorgesehen ist.

6. Vorrichtung nach den beiden vorhergehenden Ansprüchen, wobei die Anzeigevorrichtung (13) des mobilen Endgeräts (6) dazu ausgebildet ist, den Fahrweg (7) in Abhängigkeit der Markierungen der Fahrwegdaten in unterschiedlicher Weise anzuzeigen.

7. Vorrichtung nach einem der vorhergehenden Ansprüche, wobei in einer/der Speichervorrichtung (15) Fahrwegdaten von verschiedenen landwirtschaftlichen Arbeitsgeräten (1) und/oder aus verschiedenen Feldbearbeitungsvorgängen speicherbar sind, und eine Auswerteeinrichtung (8) zum Verknüpfen und Abgleichen der Fahrwegdatensätze verschiedener Arbeitsgeräte und/oder verschiedener Feldbearbeitungsvorgänge vorgesehen ist, wobei die Anzeigevorrichtung (13) des mobilen Endgeräts (6) und/oder der Auswerteeinrichtung (8) dazu ausgebildet ist, in Abhängigkeit der Auswertung der Fahrwegsdatensätze verschiedener Arbeitsgeräte und/oder verschiedener Feldbearbeitungsvorgänge die Anzeige der Fahrwegsdaten zu variieren.

8. Vorrichtung nach dem vorhergehenden Anspruch, wobei die Auswerteeinrichtung (8) dazu eingerichtet ist, die aufgezeichneten Fahrwegdatensätze verschiedener Arbeitsgeräte und/oder verschiedener Feldbearbeitungsvorgänge daraufhin auszuwerten, ob der Fahrweg aus einem zweiten Fahrwegdatensatz innerhalb eines vorbestimmten Korridors um den Fahrweg aus einem ersten Fahrwegdatensatz liegt, wobei die Anzeigevorrichtung (13) von der Auswerteeinrichtung (8) derart ansteuerbar ist, dass in einem Fahrwegsabschnitt, in dem der zweite Fahrweg innerhalb des Korridors des ersten Fahrwegs liegt, nur noch der zweite Fahrweg angezeigt wird.

9. Vorrichtung nach einem der vorhergehenden Ansprüche, wobei die Anzeigevorrichtung (13) dazu eingerichtet ist, den Fahrweg anhand der aufgezeichneten Fahrwegdaten in eine kartografische Darstellung eines bearbeiteten Felds oder Feldbereichs eingebettet darzustellen.

10. Vorrichtung nach einem der vorhergehenden Ansprüche, wobei die Auswerteeinrichtung (8) dazu eingerichtet ist, aus den aufgezeichneten Fahrwegdaten und dem bestimmten Arbeitsbetrieb/Nichtarbeitsbetrieb als Betriebsparameter die Gesamteinsatzzeit des landwirtschaftlichen Arbeitsgeräts (3) zu bestimmen.

11. Vorrichtung nach einem der vorhergehenden Ansprüche, wobei die Auswerteeinrichtung (8) dazu eingerichtet ist, aus den aufgezeichneten Fahrwegdaten und dem bestimmten Arbeitsbetrieb/Nichtarbeitsbetrieb als Betriebsparameter die Arbeitsbetriebszeit und Transportzeit des landwirtschaftlichen Arbeitsgeräts (3) in einem vorgebbaren Zeitfenster zu bestimmen.

12. Vorrichtung nach einem der vorhergehenden Ansprüche, wobei die Auswerteeinrichtung (8) dazu eingerichtet ist, aus den aufgezeichneten Fahrwegdaten und dem bestimmten Arbeitsbetrieb/Nichtarbeitsbetrieb als Betriebsparameter die Arbeitsbetriebszeit und Transportzeit des landwirtschaftlichen Arbeitsgeräts (3) zu einem Arbeitsauftrag zu bestimmen, und/oder aus den aufgezeichneten Fahrwegdaten und dem bestimmten Arbeitsbetrieb/Nichtarbeitsbetrieb als Betriebsparameter die bearbeitete Fläche zu bestimmen.

13. Vorrichtung nach einem der vorhergehenden Ansprüche, wobei die Auswerteeinrichtung (8) dazu eingerichtet ist, aus den aufgezeichneten Fahrwegdaten und dem bestimmten Arbeitsbetrieb/Nichtarbeitsbetrieb als Betriebsparameter die Anzahl der Ladewagenfuhren und/oder Anzahl der Rundballen einer Rundballenpresse zu bestimmen.

14. Vorrichtung nach einem der vorhergehenden Ansprüche, wobei die vorgenannte Bestimmungseinrichtung (9) und die vorgenannte Auswerteeinrichtung (8) Teil des mobilen Endgeräts (6) sind und zumindest teilweise von einer in das mobile Endgerät (6) ladbaren Software-App gebildet sind.

15. Vorrichtung nach einem der vorhergehenden Ansprüche, wobei das mobile Endgerät (6) und/oder die damit verbindbare, externe Auswerteeinrichtung (8) eine Schnittstelle zum Bereitstellen der aufgezeichneten Fahrwegdaten an ein Drittgerät aufweist.

## Claims

1. Device for recording travel path data of an agricultural working tool (1), comprising a data acquisition module (5) that can be attached to the working tool and is intended for acquire operating data of the working tool, and a mobile terminal (6), in particular in the form of a Smartphone or tablet, which can be brought into communicative connection with the data acquisition module (5) and is designed to evaluate the operating data received from the data acquisition module (5) and the machine identification, together with position data for determining the travel path (7) covered by the agricultural working tool (3), and/or to transmit this to an evaluation device (8) for evaluation, wherein a determination device (9) is provided for distinguishing between working operation and non-working operation of the agricultural working tool (3), **characterised in that** the data acquisition module (5) comprises an acceleration sensor (10) for acquiring accelerations acting on the agricultural working tool (2), and an inclination sensor (11) for acquiring an inclination of a working unit (3) of the agricultural working tool (1), and the mentioned determination device (9) is designed to distinguish between working operation and non-working operation on the basis of the acceleration acquired by the acceleration sensor (10) and the inclination acquired by the inclination sensor (11).

2. Device according to the preceding claim, wherein the determination device (9) comprises evaluation means (12) for evaluating the temporal progression of the acquired inclination and/or the temporal progression of the acquired acceleration, and is designed to distinguish between working operation and non-working operation on the basis of the temporal progression of the acquired acceleration and the acquired inclination.

3. Device according to the preceding claim, wherein the determination device (9) is designed to determine working operation of the agricultural working tool (1) if
- the acquired acceleration reaches or exceeds a predetermined acceleration value over a predetermined minimum time period, and
- the acquired inclination, over a predetermined minimum time period, is smaller than a predetermined maximum angle of inclination,
and/or determines non-working operation if
- the acquired acceleration over a specified time period is smaller than a predetermined maximum value, or
- the acquired inclination, over a specified time period, is greater than a predetermined minimum angle of inclination.

4. Device according to any of the preceding claims, wherein a display device (13) of the mobile terminal (6) and/or of the evaluation device (8) is designed to display travel path data for travel path portions in which working operation was determined by the determination device differently from travel path data for travel path portions in which non-working operation was determined by the determination device.

5. Device according to any of the preceding claims, wherein the mobile terminal (6) and/or the evaluation device (8) comprise a marking apparatus (14) for marking the travel path data with a marking that indicates whether working operation or non-working operation was determined in a travel path portion associated with the travel path data, and a storage means for storing the travel path data linked with the marking.

6. Device according to the two preceding claims, wherein the display device (13) of the mobile terminal (6) is designed to display the travel path (7) in different manners, depending on the markings of the travel path data.

7. Device according to any of the preceding claims, wherein travel path data from different agricultural working tools (1) and/or from different field cultivation processes can be stored in the storage means (15), and an evaluation device (8) is provided for linking and matching the travel path datasets of different working tools and/or different field cultivation processes, wherein the display device (13) of the mobile terminal (7) and/or the evaluation device (8) is designed to vary the display of the travel path data depending on the evaluation of the travel path datasets of different working tools and/or different field cultivation processes.

8. Device according to the preceding claim, wherein the evaluation device (8) is designed to subsequently evaluate the displayed travel path datasets of different working tools and/or different field cultivation processes, with regard to whether the travel path from a second travel path dataset is within a predetermined corridor around the travel path from a first travel path dataset, wherein the display device (13) can be actuated by the evaluation device (8) such that, in a travel path portion in which the second travel path is within the corridor of the first travel path, only the second travel path is displayed.

9. Device according to any of the preceding claims, wherein the display device (13) is designed to display the travel path on the basis of the plotted travel path data in a manner embedded in a cartographical representation of a cultivated field or field region.

10. Device according to any of the preceding claims, wherein the evaluation device (8) is designed to determine, using the plotted travel path data and the specified working operation/non-operation as operating parameters, the total operating time of the agricultural working tool (3).

11. Device according to any of the preceding claims, wherein the evaluation device (8) is designed to determine, using the plotted travel path data and the specified working operation/non-operation as operating parameters, the working operation time and transport time of the agricultural working tool (3) in a specifiable time window.

12. Device according to any of the preceding claims, wherein the evaluation device (8) is designed to determine, using the plotted travel path data and the specified working operation/non-operation as operating parameters, the working operation time and transport time of the agricultural working tool (3) for a job order, and/or, using the plotted travel path data and the specified working operation/non-operation as operating parameters, the cultivated surface area.

13. Device according to any of the preceding claims, wherein the evaluation device (8) is designed to determine, using the plotted travel path data and the specified working operation/non-operation as operating parameters, the number of loader wagon trips and/or the number of round bales of a round baler.

14. Device according to any of the preceding claims, wherein the above-mentioned determination device (9) and the above-mentioned evaluation device (8) are part of the mobile terminal (6) and are formed at least in part by a software App that can be downloaded onto the mobile terminal (6).

15. Device according to any of the preceding claims, wherein the mobile terminal (6) and or the external evaluation device (8) that can be connected thereto comprises an interface for providing the plotted travel path data on a third-party device.

## Revendications

1. Dispositif d'enregistrement de données de trajet d'un appareil de travail (1) agricole, comprenant un module d'acquisition de données (5), qui peut être monté sur l'appareil de travail, pour acquérir des données de fonctionnement de l'appareil de travail, ainsi qu'un terminal mobile (6), en particulier sous la forme d'un mobile multifonction ou d'une tablette, qui peut être amené en liaison de communication avec le module d'acquisition de données (5) et qui est conçu pour évaluer, et/ou transmettre pour évaluation à un dispositif d'évaluation (8), les données de fonctionnement reçues par le module d'acquisition de données (5) et l'identifiant de machine conjointement avec des données de position afin de déterminer le trajet (7) parcouru par l'appareil de travail (3) agricole, un dispositif de détermination (9) étant prévu pour distinguer un mode de travail d'un mode de non-travail de l'appareil de travail (3) agricole, **caractérisé en ce que** le module d'acquisition de données (5) comporte un capteur d'accélération (10) pour détecter des accélérations agissant sur l'appareil de travail (3) agricole et un capteur d'inclinaison (11) pour détecter une inclinaison d'une unité de travail (3) de l'appareil de travail (1) agricole, et ledit dispositif de détermination (9) est conçu pour distinguer le mode de travail du mode de non-travail en s'appuyant sur l'accélération détectée par le capteur d'accélération (10) et sur l'inclinaison détectée par le capteur d'inclinaison (11).

2. Dispositif selon la revendication précédente, dans lequel le dispositif de détermination (9) comporte des moyens d'évaluation (12) pour évaluer la variation dans le temps de l'inclinaison détectée et/ou la variation dans le temps de l'accélération détectée et est conçu pour distinguer le mode de travail du mode de non-travail en s'appuyant sur la variation dans le temps de l'accélération détectée et de l'inclinaison détectée.

3. Dispositif selon la revendication précédente, dans lequel le dispositif de détermination (9) est conçu pour déterminer un mode de travail de l'appareil de travail (1) agricole, quand
- l'accélération détectée atteint ou dépasse une valeur d'accélération prédéfinie pendant une durée minimale prédéfinie, et
- l'inclinaison détectée est inférieure à un angle d'inclinaison maximal prédéfini pendant une durée minimale prédéfinie,
et/ou détermine un mode de non-travail, quand
- l'accélération détectée est inférieure à une valeur maximale prédéfinie pendant une durée prédéfinie, ou
- l'inclinaison détectée est supérieure à un angle d'inclinaison minimal prédéfini pendant une durée prédéfinie.

4. Dispositif selon l'une des revendications précédentes, dans lequel un dispositif d'affichage (13) du terminal mobile (6) et/ou du dispositif d'évaluation (8) est configuré pour afficher des données de trajet relatives à des portions de trajet pour lesquelles le mode de travail a été déterminé par le dispositif de détermination, différemment de données de trajet relatives à des portions de trajet pour lesquelles le mode de non-travail a été déterminé par le dispositif de détermination.

5. Dispositif selon l'une des revendications précédentes, dans lequel le terminal mobile (6) et/ou le dispositif d'évaluation (8) comporte un dispositif de marquage (14) pour marquer les données de trajet avec un marquage qui indique si, dans une portion de trajet appartenant aux données de mécanisme de déplacement, le mode de travail ou le mode de non-travail a été déterminé, ainsi qu'un dispositif de mémoire pour stocker les données de véhicule associées aux marquages.

6. Dispositif selon les deux revendications précédentes, dans lequel le dispositif d'affichage (13) du terminal mobile (6) est conçu pour afficher le trajet (7) de manière différente en fonction des marquages des données de trajet.

7. Dispositif selon l'une des revendications précédentes, dans lequel des données de trajet de différents appareils de travail (1) agricoles et/ou de différents processus de travail du sol peuvent être enregistrées dans un/le dispositif de mémoire (15), et un dispositif d'évaluation (8) est prévu pour associer et comparer les jeux de données de trajet de différents appareils de travail et/ou de différents processus de travail du sol, le dispositif d'affichage (13) du terminal mobile (6) et/ou du dispositif d'évaluation (8) étant conçu pour changer l'affichage des données de trajet en fonction de l'évaluation des jeux de données de trajet de différents appareils de travail et/ou de différents processus de travail du sol.

8. Dispositif selon la revendication précédente, dans lequel le dispositif d'évaluation (8) est configuré pour évaluer les jeux de données de trajet enregistrés de différents appareils de travail et/ou de différents processus de travail du sol pour déterminer si le trajet d'un second jeu de données de trajet se trouve à l'intérieur d'un couloir prédéfini autour du trajet d'un premier jeu de données de trajet, le dispositif d'affichage (13) pouvant être commandé par le dispositif d'évaluation (8) de telle manière que, dans une portion de trajet dans laquelle le second trajet se trouve à l'intérieur du couloir du premier trajet, seul le second trajet est encore affiché.

9. Dispositif selon l'une des revendications précédentes, dans lequel le dispositif d'affichage (13) est configuré pour représenter le trajet de façon incorporée dans une représentation cartographique d'un champ ou d'un domaine de champs travaillé en s'appuyant sur les données de trajet enregistrées.

10. Dispositif selon l'une des revendications précédentes, dans lequel le dispositif d'évaluation (8) est configuré pour déterminer, à partir des données de trajet enregistrées et du mode de travail / mode de non-travail déterminé, le temps d'utilisation total de l'appareil de travail (3) agricole comme paramètre de fonctionnement.

11. Dispositif selon l'une des revendications précédentes, dans lequel le dispositif d'évaluation (8) est configuré pour déterminer, à partir des données de trajet enregistrées et du mode de travail / mode de non-travail déterminé, le temps de fonctionnement en mode de travail et le temps de transport de l'appareil de travail (3) agricole dans une fenêtre de temps prédéfinissable comme paramètre de fonctionnement.

12. Dispositif selon l'une des revendications précédentes, dans lequel le dispositif d'évaluation (8) est configuré pour déterminer, à partir des données de trajet enregistrées et du mode de travail / mode de non-travail déterminé, le temps de fonctionnement en mode de travail et le temps de transport de l'appareil de travail (3) agricole relatifs à une tâche comme paramètre de fonctionnement et/ou pour déterminer, à partir des données de trajet enregistrées et du mode de travail / mode de non-travail déterminé, la surface travaillée comme paramètre de fonctionnement.

13. Dispositif selon l'une des revendications précédentes, dans lequel le dispositif d'évaluation (8) est configuré pour déterminer, à partir des données de trajet enregistrées et du mode de travail / mode de non-travail déterminé, le nombre de chargements de chargeuse et/ou le nombre de balles rondes d'une presse à balles rondes comme paramètre de fonctionnement.

14. Dispositif selon l'une des revendications précédentes, dans lequel le dispositif de détermination (9) mentionné précédemment et le dispositif d'évaluation (8) mentionné précédemment font partie du terminal mobile (6) et sont formés au moins en partie par une application logicielle qui peut être chargée dans le terminal mobile (6).

15. Dispositif selon l'une des revendications précédentes, dans lequel le terminal mobile (6) et/ou le dispositif d'évaluation (8) externe, qui peut être relié à celui-ci, comportent une interface permettant de fournir les données de trajet enregistrées à un appareil tiers.
